# EUROPÄISCHE PATENTANMELDUNG

(11) **EP 1 413 835 A2**
(43) Veröffentlichungstag der Anmeldung: **28.04.2004**
(21) Anmeldenummer: 03021850.7
(22) Anmeldetag: 29.09.2003
(51) Int. Cl.: F24J 2/24, F24J 2/26, F24J 2/46

(54) **Leerlaufender Sonnenkollektor**

(30) Priorität: 21.10.2002 DE 20216145 U
(71) Anmelder: Consolar Energiespeicher- und Regelungssysteme GmbH, 60489 Frankfurt am Main (DE)
(72) Erfinder: Leibfried, Ulrich, 79539 Lörrach (DE)

(57) **Zusammenfassung**

Die Erfindung betrifft thermische Solaranlagen, mit denen Wärmeenergie z. B. für die Warmwasserbereitung und / oder solare Heizungsunterstützung gewonnen werden kann.

Aufgabenstellung der Erfindung ist es, Sonnenkollektoren zu schaffen, mit denen sowohl eine sichere Entlüftung auch bei kleinen Durchflüssen als auch ein sicheres Leerlaufen ohne Schrägstellen der Kollektorunterkante 9 auf der Dachfläche erreicht wird.

Die Aufgabenstellung wird erfindungsgemäß folgendermaßen gelöst:

Der Sonnenkollektor 1 ist mit einer mäanderförmigen Verrohrung 2 ausgestattet. Die Mäander verlaufen jeweils mit einer Schräge, so dass das Wasser bei horizontaler und auch leicht schräger Unterkante 9 leerläuft. Zugang 3 und Abgang 4 der Verrohrung befinden sich jeweils auf der gleichen Seite, aber einmal unten, einmal oben. Zwei einzelne Kollektoren oder zwei vertikale Kollektorreihen können horizontal nebeneinander montiert werden und sind dabei so zueinander orientiert, dass die Zu- und Abgänge 3, 4, der obersten und untersten Kollektoren beieinander liegen, so, dass die beiden obersten Anschlüsse 4 durch ein Verbindungsstück 5 miteinander verbunden werden und an den beiden untersten Anschlüssen die Verrohrung angeschlossen wird.

## Beschreibung

Die Erfindung betrifft thermische Solaranlagen, mit denen Wärmeenergie z. B. für die Warmwasserbereitung und / oder solare Heizungsunterstützung gewonnen werden kann.

Stand der Technik sind hierfür Anlagen, bei denen durch die Sonnenkollektoren mit Frostschutzmittel gemischtes Wasser gepumpt wird. Dieses Medium fließt dann durch einen Wärmetauscher im Wärmespeicher der Anlage. Ebenfalls Stand der Technik, wenn auch weit weniger verbreitet, sind sogenannte Leerlauf- oder drain back-Anlagen. Hier wird meist reines Wasser ohne Zusätze durch die Kollektoren gefördert. Wenn die Sonne nicht oder ungenügend scheint, läuft das Wasser zurück in ein Reservoir, dadurch werden Frostschäden in den Kollektoren oder im Frostbereich verlegten Leitungen vermieden.

Problematisch bei diesen Anlagen ist, wenn sie nicht vollständig leerlaufen, dass es zu Frostschäden kommen kann. Ursache hierfür sind oft Montagefehler. Eine wichtige Quelle für Montagefehler sind die Sonnenkollektoren. Für Leerlauf geeignete Kollektoren müssen so aufgebaut sein, dass sie beim Starten der Pumpe, die das Wasser umwälzt, automatisch entlüftet werden. Bei Pumpenstillstand müssen sie vollständig leerlaufen.

Es gibt insbesondere zwei bekannte Verrohrungsarten für Sonnenkollektoren:
1. Die sogenannte Harfenverrohrung, bei der unten und oben am Kollektor jeweils ein Sammlerrohr angebracht ist, durch das das Wasser zu- und abfließt. Die Sammlerrohre sind durch mehrere parallel durchströmte Röhrchen verbunden, die ihrerseits in gutem Wärmekontakt zum Absorberblech stehen, welches das Sonnenlicht in Wärme umwandelt. Mehrere Kollektoren können entweder in Reihe geschaltet werden oder die Sammlerrohre werden oben und unten miteinander verbunden und alle Absorberröhrchen werden parallel durchströmt.
2. Die sogenannte Mänderverrohrung: hier ist ein mäanderförmig gebogenes Rohr gut wärmeleitend mit dem Absorberblech verbunden. Mehrere Kollektoren können entweder in Reihe geschaltet werden oder es werden extern Sammlerrohre verlegt und die Kollektoren werden parallel durchströmt.

Beide Kollektorarten werden für Leerlaufanlagen eingesetzt. Beide Bauarten sind jedoch mit Nachteilen verbunden:

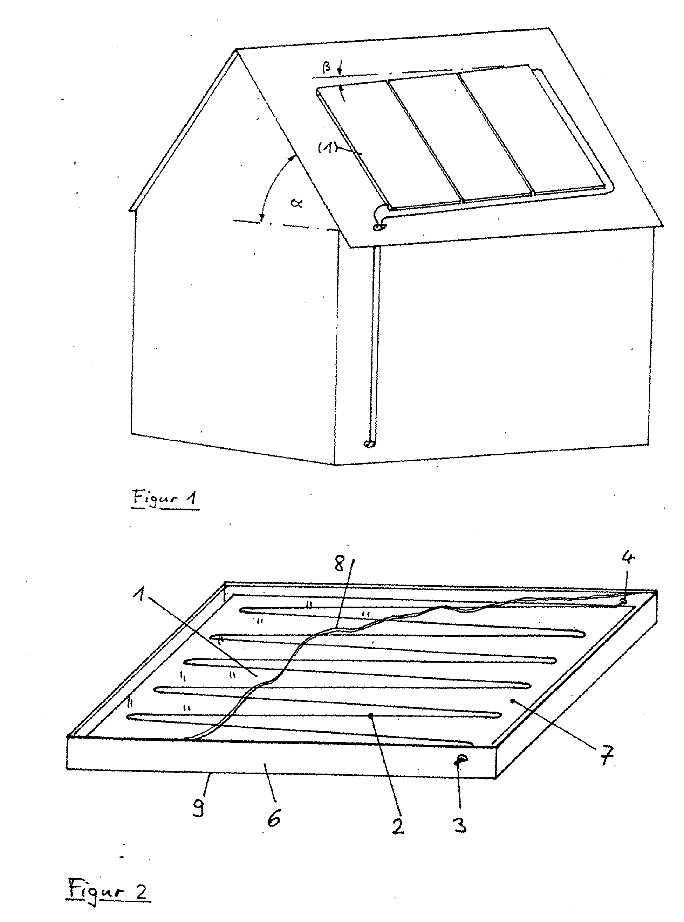

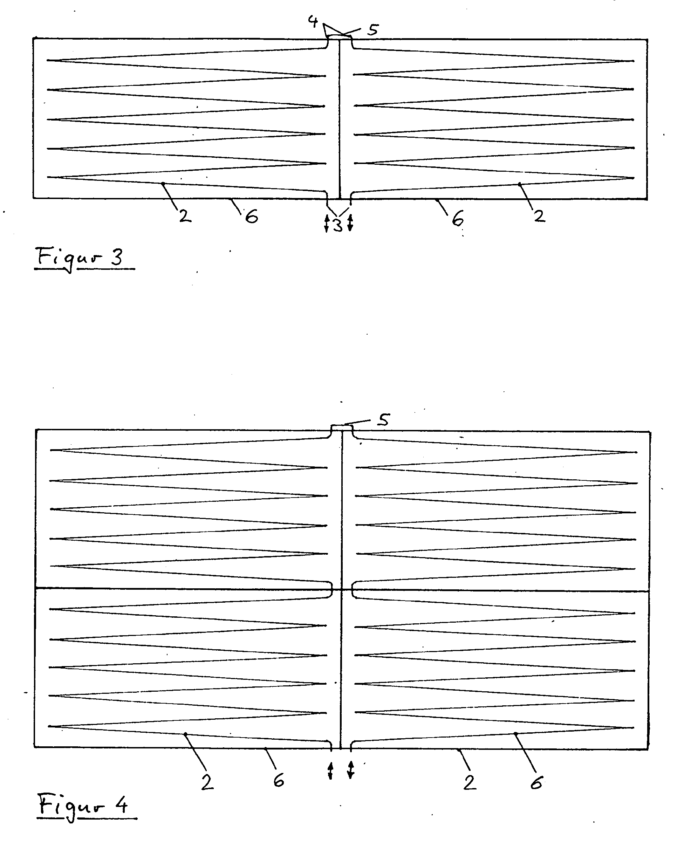

Die Harfenkollektoren müssen auf der Dachläche schräg montiert werden (β > 0), damit sie sicher leerlaufen (siehe Figur 1). Dies ist zum einen vom optischen Eindruck nicht optimal, zum anderen können hierbei Montagefehler begangen werden (zu kleiner Winkel oder Winkel in die falsche Richtung). Funktionsfehler können auch dadurch auftreten, dass die Kollektoren auf alten, durchhängenden Dächern montiert werden. Die Anwendung ist zudem dadurch begrenzt, dass zur Entlüftung des oberen Sammlerrohres bei horizontaler Montage auf Grund seines großen Querschnittes, ein recht großer Durchfluss nötig ist. Der Querschnitt ist für eine gleichmäßige Durchströmung der Absorberröhrchen nötig. Es kann also im Betrieb zu Zuständen kommen, wo sich im oberen Sammler Luft ansammelt, die nicht weg transportiert wird und dadurch den Widerstand der Anlage erhöht und eine gleichmäßige Durchströmung der Absorberröhrchen verhindert. Da Zu- und Ablauf der Kollektoren i. d. R. an gegenüberliegenden Stellen des Kollektorfeldes plaziert sind, muss auf dem Dach die eine Leitung mit Gefälle zur anderen hin verlegt werden, damit beide Leitungen nebeneinander liegen, denn beide Leitungen werden meist zusammen, meist auch innerhalb eines Doppeldämschlauches im Haus verlegt. Bei dieser bauseitigen Verrohrung auf dem Dach liegt wieder eine potentielle Fehlerquelle vor.

Bei mäanderförmigen Kollektoren sind externe Sammlerleitungen nötig, die mit Gefälle verlegt werden müssen. Auch dies ist eine Fehlerquelle. Falls eine Sammlerleitung oben und eine unten angeordnet ist, liegt das gleiche Entlüftungsproblem wie oben beschrieben, vor. Falls beide Sammlerleitungen unten angeordnet sind, müssen die einzelnen Mäanderrohre mit einem Durchfluss, der einen Mindestwert nicht unterschreiten darf, entlüftet werden. Andernfalls werden nicht alle Kollektoren durchströmt. Auch dies ist eine potentielle Fehlerquelle.

Ein weiterer kritischer Punkt bei Leerlauf geeigneten Kollektoren ist das Verdampfungsverhalten. In den Kollektoren können Unterdrücke gegenüber der Atmosphäre auftreten. Dies führt zu Verdampfungstemperaturen unter 100 °C, d. h., es kann leicht zur Verdampfung des Wassers kommen. In diesem Fall ist es wichtig, dass nicht Teile der Verrohrung durch Dampfblasen ausfallen oder der gesamte Durchfluss zusammenbricht. Beides kann bei den oben beschriebenen Verrohrungsarten passieren.

Aufgabenstellung der Erfindung ist es, Sonnenkollektoren zu entwickeln, mit denen sowohl eine sichere Entlüftung auch bei kleinen Durchflüssen als auch ein sicheres Leerlaufen ohne Schrägstellen der Kollektoren auf der Dachfläche erreicht wird. Gleichzeitig soll ein sicheres Verdampfungsverhalten gegeben sein. Zudem sollen die Anschlüsse für Zu- und Ablauf möglichst in unmittelbarer Nähe zueinander liegen. Eine externe Sammlerverrohrung soll nicht nötig sein. Die Kollektoren sollen in unterschiedlichen Anordnungen zueinander montierbar sein, um für unterschiedliche verfügbare Dachflächen geeignet zu sein.

Die Aufgabenstellung wird erfindungsgemäß folgendermaßen gelöst (siehe Figur 2):

Der Sonnenkollektor 1 ist mit einer mäanderförmigen Verrohrung 2 ausgestattet. Die Mäander verlaufen jeweils mit einer Schräge, so dass das Wasser bei um die Unterkante 9 geneigtem Kollektor leerläuft. Typische Neigungswinkel α (vgl. Figur 1) sind zwischen 45 ° und 90 °. Die Unterkante 9 kann ― wie bei Standardkollektoren üblich - horizontal montiert werden (β = 0). Eine leichte Schräge durch Montagefehler ist unkritisch, solange die Differenz zwischen Mäanderschräge und Montageschräge kleiner ist als ein Mindestleerlaufwinkel. Zugang 3 und Abgang 4 der Verrohrung befinden sich jeweils auf der gleichen Seite, aber einmal unten, einmal oben. Um bei der im folgenden beschriebenen Verschaltung der einzelnen Kollektoren eine günstige Ausnutzung der üblichen Dachflächen zu erreichen, hat der Kollektor vorzugsweise eine größere Breite als Länge.

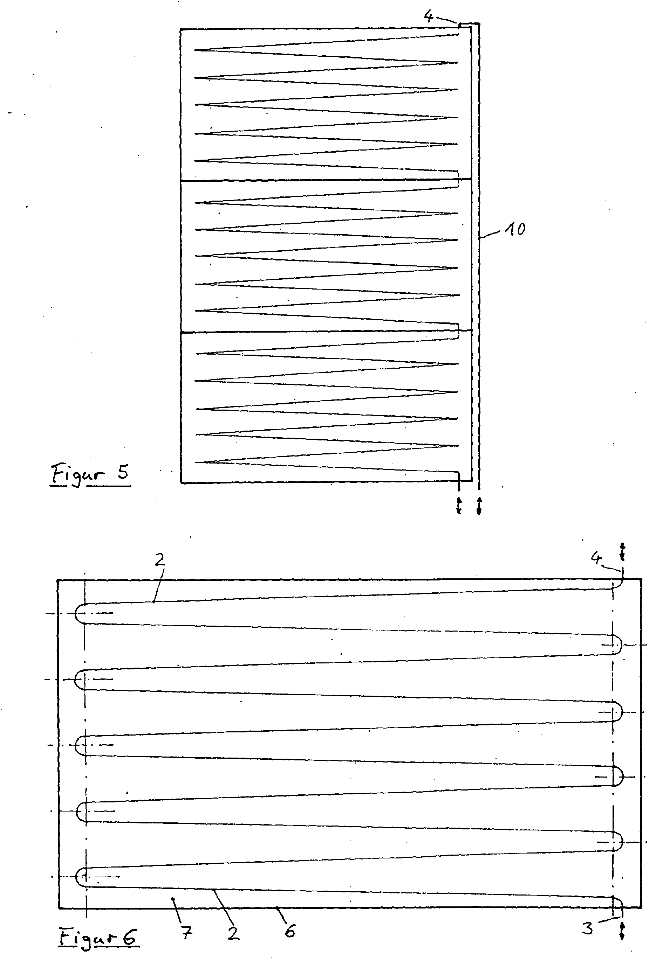

Die Kollektoren werden miteinander in Reihe verschaltet. Dabei sind verschiedene Anordnungen möglich:
1. Zwei Kollektoren können horizontal nebeneinander montiert werden (siehe Figur 3). Dabei werden sie so zueinander orientiert, dass die Zu- und Abgänge 3, 4, beieinander liegen. Oben können die beiden Anschlüsse 4 durch ein Verbindungsstück 5 miteinander verbunden werden. Unten kann die Verrohrung angeschlossen werden.
2. Vier Kollektoren können montiert werden, indem jeweils zwei übereinander liegende Kollektoren horizontal in Reihe geschaltet werden (siehe Figur 4). Somit werden zwei Mäandem von unten nach oben durchströmt, dann gelangt das Wasser durch das Verbindungsstück 5 in den oberen der anderen beiden Kollektoren und von dort in den unteren vierten Kollektor. Eine größere Anzahl an Kollektoren (z. B. sechs) ist nach dem selben Schema realisierbar: immer wird zweimal die Hälfte der Gesamtzahl jeweils übereinander in Reihe geschaltet und die beiden vertikalen Reihen werden oben durch das Verbindungsstück 5 miteinander verbunden. Die Anzahl der miteinander verschaltbaren Kollektoren ist lediglich durch die verfügbare Fläche und den zulässigen Gesamtdruckverlust des Kollektorfeldes begrenzt.
3. Es ist auch möglich, das Feld aus nur einer vertikalen Kollektorreihenschaltung (z. B. 2, 3 4 oder 5 Kollektoren) aufzubauen (siehe Figur 5). Vom oberen Abgang 4 des letzten Kollektors muss dann eine Leitung 10 entlang der Kollektoren nach unten geführt werden. Diese Leitungsführung ist völlig fehlerunkritisch und steht daher der erfindungsgemäßen Aufgabenstellung nicht entgegen.

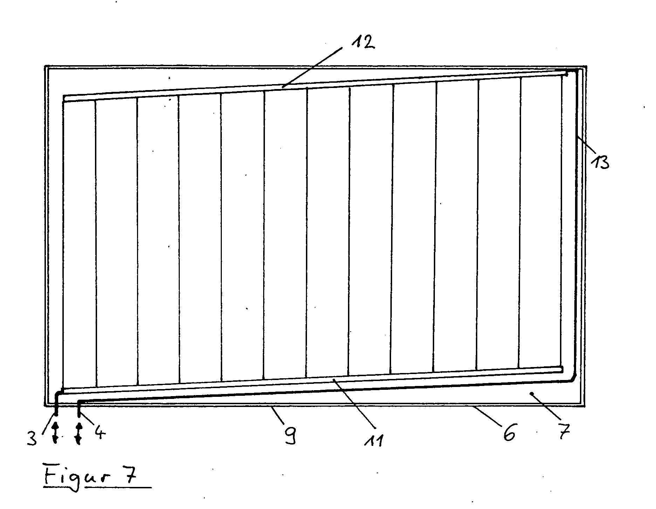

Im folgenden wird anhand Figur 2 und 6 eine konkrete Ausgestaltung der Erfindung beschrieben.

Der Sonnenkollektor 1 besteht aus einem isolierten Kollektorgehäuse 6, in dem das Absorberblech 7 liegt. Der Kollektor ist nach oben durch eine transparente Abdeckung 8 abgeschlossen. Ein mäanderförmig gebogenes Rohr 2 ist gut wärmeleitend mit dem Absorberblech 7 verbunden. Figur 6 zeigt die Verrohrung 2. Das Rohr kann beispielsweise einen Innendurchmesser von 10 - 11 mm aufweisen. Damit ist bei einer Absorberfläche von ca. 2, 5 m² die Reihenschaltung von vier Kollektoren mit akzeptablem Druckverlust möglich.

Andere Rohranschlüsse als oben beschrieben, sind ebenfalls möglich: statt der dargestellten Verrohrung, bei der Zugang 3 und Abgang 4 jeweils nach oben und unten aus dem Kollektorgehäuse 6 kommen, können sie z. B. auch horizontal aus der Längsseite des Gehäuses 6 oben und unten austreten. In diesem Fall ist für zwei nebeneinander liegende Kollektoren kein Verbindungsstück 5 nötig, dafür aber für übereinander liegende.

Eine andere Lösung für die Aufgabenstellung der Erfindung wird dadurch erreicht, dass die Kollektorfläche nicht aus einzelnen Kollektormodulen, sondern aus einem einzigen Großflächenmodul aufgebaut wird. In diesem Fall kann sowohl eine Harfen- als auch eine Mäanderverrohrung gewählt werden. Die Sammlerleitungen können innerhalb des Kollektors schräg verlegt sein, so dass auch bei horizontaler Montage des Kollektors ein sicheres Leerlaufen gewährleistet ist.

Figur 7 zeigt eine konkrete Ausgestaltung der Erfindung mit harfenförmiger Verrohrung. Die untere Sammlerleitung 11 und die obere Sammlerleitung 12 sind innerhalb des Kollektorgehäuses 6 schräg verlegt. Das Absorberblech 7 füllt aber den Raum des Kollektorgehäuses bis zum Rand aus, so dass durch die schrägen Leitungen keine Strahlung verloren geht. An der oberen Sammlerleitung ist an der höchsten Stelle ein Rohr 13 mit kleinerem Durchmesser angebracht, genügend klein, damit Luft darin nach unten transportiert wird. Dieses Rohr ist ebenfalls innerhalb des Kollektorgehäuses 6 bis zur Zugangsleitung 3 geführt, so dass der Abgang 4 direkt daneben aus dem Gehäuse 6 geführt werden kann.

Eine Vielzahl anderer interner Verrohrungen ist auch möglich, wenn jeweils nach dem erfindungsgemäßen Prinzip verfahren wird: Anbringung der Leitungen mit Schrägen innerhalb des Großflächenkollektors so, dass das Wasser bei horizontaler Montage des Kollektors sicher leerläuft.

Die beschriebenen Sonnenkollektoren müssen nicht ausschließlich für drain back-Anlagen eingesetzt werden. Sie können generell auch bei herkömmlichen Anlagen mit Frostschutzmittel Verwendung finden, da sie auch bei diesen Anlagen Vorteile bieten: Sichere Inbetriebnahme durch sicheres Entlüften (ein Entlüfter an der höchten Stelle ist nicht nötig), das Medium kann vollständig abgelassen werden, wenn es z. B. ersetzt werden soll (bei herkömmlichen Anlagen verbleiben fast immer Reste) und unkritisches Verdampfungsverhalten, wenn die aufgefangene Solarwärme nicht abgenommen wird:

Der komplette Kollektorinhalt wird durch die Verdampfung leergedrückt, so dass keine Frotsschutzmittelreste verbleiben und hohen, sie zerstörenden Temperaturen ausgesetzt werden.

## Patentansprüche

1. Sonnenkollektoren für Solaranlagen zur Gewinnung von Wärmeenergie, die mit einem flüssigen Wärmeträgermedium durchströmt sind,
**dadurch gekennzeichnet, dass** der Sonnenkollektor (1) mit einer mäanderförmigen Verrohrung (2) ausgestattet ist, und die Mänder jeweils mit Schrägen verlaufen, so dass das Wärmeträgermedium bei schräg aufgestelltem Kollektor und horizontaler oder leicht schräger Unterkante (9) leerläuft, weiterhin **dadurch gekennzeichnet, dass** sich Zugang (3) und Abgang (4) der Kollektorverrohrung jeweils auf der gleichen Seite befinden, aber einmal unten und einmal oben, weiterhin **dadurch gekennzeichnet, dass** ein Feld aus mehreren Kollektoren dadurch aufgebaut werden kann, dass entweder die einzelnen Kollektoren in beliebiger Anzahl vertikal in Reihe geschaltet werden oder dadurch, dass zwei einzelne Kollektoren oder zwei vertikale Kollektorreihen horizontal nebeneinander montiert werden und dabei so zueinander orientiert sind, dass die Zu- und Abgänge (3), (4), der obersten und untersten Kollektoren beieinander liegen, und die beiden obersten Anschlüsse (4) miteinander verbunden werden und an den beiden untersten Anschlüssen die Verrohrung angeschlossen wird.

2. Sonnenkollektoren nach Anspruch 1,
**dadurch gekennzeichnet, dass** der Sonnenkollektor (1) eine größere horizontale als vertikale Abmessung hat.

3. Sonnenkollektor für Solaranlagen zur Gewinnung von Wärmeenergie, die mit einem flüssigen Wärmeträgermedium durchströmt sind,
**dadurch gekennzeichnet, dass** die gesamte Kollektorfläche aus einem einzigen Großflächenmodul aufgebaut wird, wobei die Sammlerleitungen innerhalb des Kollektors schräg verlegt werden, so dass auch bei horizontaler Unterkante (9) des Kollektors ein sicheres Leerlaufen gewährleistet ist.

4. Sonnenkollektor nach Anspruch 3,
**dadurch gekennzeichnet, dass** an der oberen Sammlerleitung an der höchsten Stelle ein Rohr (13) mit genügend kleinem Durchmesser angebracht ist, damit Luft darin nach unten transportiert wird, und dass dieses Rohr ebenfalls innerhalb des Kollektorgehäuses (6) bis zur Zugangsleitung (3) geführt, so dass der Abgang (4) direkt daneben aus dem Gehäuse (6) geführt werden kann.

5. Sonnenkollektor nach einem der Ansprüche 1 bis 4,
**dadurch gekennzeichnet, dass** das Absorberblech (7) den Raum des Kollektorgehäuses bis zum Rand ausfüllt, so dass durch die schrägen Leitungen keine Strahlung verloren geht.
